# FASCICULE DE BREVET EUROPEEN

(11) **EP 1 694 483 B1**
(45) Date de publication et mention de la délivrance du brevet: **13.01.2010**
(21) Numéro de dépôt: 04805389.6
(22) Date de dépôt: 04.11.2004
(51) Int. Cl.: B29C 33/26

(54) **DISPOSITIF DE MOULAGE POUR LA FABRICATION DE RECIPIENTS EN MATERIAU THERMOPLASTIQUE**
FORMVORRICHTUNG ZUR HERSTELLUNG VON AUS THERMOPLASTISCHEM MATERIAL HERGESTELLTEN BEHÄLTNISSEN
MOULDING DEVICE FOR PRODUCING RECIPIENTS MADE OF A THERMOPLASTIC MATERIAL

(30) Priorité: 19.12.2003 FR 0315083
(43) Date de publication de la demande: 30.08.2006
(73) Titulaire: SIDEL PARTICIPATIONS, 76930 Octeville-sur-Mer (FR)
(72) Inventeur: MIE, Patrick c/o Sidel Participations, F-76930 Octeville-sur-Mer (FR); LEMAISTRE, Eric c/o Sidel Participations, F-76930 Octeville-Sur-Mer (FR); ROUSSEAU, Nicolas c/o Sidel Participations, F-76930 Octeville-sur-Mer (FR); LANGLOIS, Pierre-François c/o Sidel Participations, F-76930 Octeville-sur-Mer (FR)
(74) Mandataire: Gorrée, Jean-Michel
(86) Numéro de dépôt international: PCT/FR2004/002839
(87) Numéro de publication internationale: WO 2005/068147

(56) Documents cités:
- FR-A- 2 646 802
- FR-A- 2 653 058
- US-A- 3 825 396
- US-A- 4 579 519
- PATENT ABSTRACTS OF JAPAN vol. 0186, no. 66 (M-1724), 15 décembre 1994 (1994-12-15) & JP 06 262671 A (NISSEI ASB MACH CO LTD), 20 septembre 1994 (1994-09-20) & JP 06 262671 A (NISSEI ASB MACH CO LTD) 20 septembre 1994 (1994-09-20)

## Description

La présente invention concerne d'une façon générale le domaine des dispositifs de moulage pour la fabrication par soufflage ou étirage-soufflage de récipients à partir de préformes en matériau thermoplastique chauffé.

Plus particulièrement, l'invention concerne des perfectionnements apportés à ceux de ces dispositifs de moulage qui sont agencés comme indiqué dans le préambule de la revendication 1. Le document US 3 825 396 décrit un tel dispositif.

D'après le document FR-A-2 646 802, on connaît des moyens de verrouillage de deux demi-moules en position de fermeture qui comprennent une pluralité de doigts d'accouplement supportés les uns au-dessus des autres, de façon coaxiale, par un premier demi-moule et propres à être déplacés parallèlement à l'axe du moule pour s'engager dans une pluralité de lumières de réception respectives supportées par le second demi-moule.

De tels moyens de verrouillage donnent satisfaction et sont aujourd'hui d'un emploi courant dans les dispositifs de moulage à moules dits "portefeuilles".

Toutefois, ces moyens de verrouillage présentent plusieurs inconvénients importants.

Un inconvénient réside dans le fait que les doigts et lumières de réception sont supportés en porte-à-faux par les premier et second demi-moules, respectivement. Lors de l'application de la pression de soufflage (par exemple typiquement de l'ordre de 40 x 10⁵ Pa), les supports de ces doigts et lumières de réception, en saillie radiale, sont soumis à un effort sensiblement tangentiel à la périphérie du moule. Pour éviter leur déformation ou arrachement, il est nécessaire de constituer ces supports sous forme massive, ce qui accroît le poids des demi-moules et aussi leur coût.

Un autre inconvénient réside dans la structure en porte-à-faux de chaque doigt, dont la base est encastrée dans un support en saillie radiale solidaire d'un demi-moule tandis que, en position de verrouillage, l'extrémité libre du doigt est retenue dans une lumière de réception correspondante d'un support en saillie radiale solidaire de l'autre demi-moule. Sous l'effort de soufflage, chaque doigt est soumis à une contrainte de flexion/cisaillement qui, là encore, nécessite que chaque doigt soit constitué sous forme massive, et donc lourde et coûteuse.

Toutes ces exigences conduisent à des moyens de verrouillage en saillie sensible sur la périphérie du moule, alors que, dans les installations comportant un grand nombre de moules et fonctionnant à grande vitesse (dispositifs de moulage rotatifs du type carrousel), la place disponible est très comptée. En outre, ces moyens de verrouillage sont pesants et accroissent l'inertie des demi-moules, ce qui est préjudiciable dans les installations fonctionnant à cadence élevée.

Enfin, on soulignera que le mode de verrouillage/déverrouillage par déplacement axial d'une pluralité de doigts superposés ("en ligne") implique des courses relativement longues pour que la portion de chaque doigt engagée dans sa lumière correspondante soit suffisamment longue et procure une résistance mécanique appropriée : il n'est donc possible de prévoir qu'un nombre restreint de doigts et lumières, espacés axialement les uns des autres de façon notable. Il en résulte finalement une répartition non uniforme des efforts sur la hauteur du moule.

Il existe donc une demande constante pour des moules à structure simplifiée, moins encombrante, moins lourde, plus simple, moins coûteuse, cette demande étant rendue plus sensible par la recherche de cadences de production plus élevées qui nécessitent des mécanismes à fonctionnement plus rapide avec des inerties moindres.

A ces fins, l'invention propose un dispositif de moulage tel que mentionné au préambule qui, étant agencé conformément à l'invention, se caractérise en ce que les moyens de verrouillage sont agencés de la façon suivante :
- lesdits crochets et évidements respectivement desdits bords à recouvrement intérieur et extérieur s'étendent sensiblement sur toute la hauteur du moule,
- un lardon s'étendant sensiblement sur toute la hauteur du moule est monté de façon rotative autour d'un axe en correspondance avec un de ses bords dans l'un desdits évidements et au contact du crochet respectif, et
- des moyens d'entraînement sont associés fonctionnellement audit lardon pour son pivotement autour de son axe entre deux positions extrêmes,
ce grâce à quoi le lardon peut occuper deux positions fonctionnelles, à savoir :
- une position effacée dans son évidement de montage dans laquelle le lardon n'engage pas l'évidement en vis-à-vis de l'autre bord à recouvrement et autorise un déplacement relatif mutuel des deux demi-moules (ouverture ou fermeture du moule) et
- une position saillante dans laquelle le lardon est pivoté vers l'extérieur de son évidement de montage et - les deux demi-moules étant en position de fermeture - s'engage dans l'évidement en vis-à-vis de l'autre bord à recouvrement de sorte que, lorsque les deux demi-moules sont soumis à des efforts tendant à les écarter l'un de l'autre (pré-soufflage, soufflage), ledit lardon est en prise avec les deux crochets respectifs des deux bords à recouvrement et retient mécaniquement les deux demi-moules.

Grâce aux dispositions de l'invention, on constitue des moyens de verrouillage des deux demi-moules en position de fermeture tels que les efforts tendant à séparer ces demi-moules au cours de certaines étapes (pré-soufflage, soufflage) sont uniformément repris sur toute la hauteur du moule. En outre, les verrouillage et déverrouillage du moule obtenus par mise en rotation d'un lardon rotatif autour d'un de ses bords sont procurés pour des angles de rotation relativement faibles du lardon, par exemple de l'ordre de 20° : une telle rotation de relativement faible amplitude angulaire peut être effectuée de façon relativement rapide. Cette rapidité des verrouillage et déverrouillage s'inclut parfaitement dans le cadre des contraintes de fonctionnement souhaitées par les utilisateurs des installations de fabrication de récipients thermoplastiques par soufflage ou étirage-soufflage, pour lesquelles sont requises des cadences de production toujours plus rapides. En outre, on soulignera la simplicité structurelle des moyens de verrouillage proposés conformément à l'invention, lesquels ne comportent qu'une seule pièce mobile de grande hauteur certes (c'est-à-dire la hauteur du moule), mais de faible épaisseur et de relativement petite largeur. Il en résulte une inertie relativement limitée du lardon au cours de sa rotation, ce qui, là encore, va dans un sens autorisant des cadences plus élevées. Enfin l'agencement des demi-moules pour l'implantation structurelle et fonctionnelle du lardon ne nécessite pas des ajouts sensibles de matière, de sorte qu'également l'inertie des demi-moules mobiles se trouve sensiblement minorée par rapport aux solutions antérieures. Globalement, l'ensemble des moyens de verrouillage agencés conformément à l'invention permet d'envisager un accroissement significatif de la vitesse de fonctionnement du moule au cours des phases de fermeture/- verrouillage et de déverrouillage/ouverture, en même temps qu'un allègement des organes périphériques (axes, supports, ...) peut être aussi prévu.

Les dispositions conformes à l'invention, bien que pouvant trouver application dans tout type de moule, semblent devoir avoir un intérêt tout particulier lorsque le moule est du type portefeuille avec les deux demi-moules articulés mutuellement en rotation sur un arbre sensiblement parallèle à un côté du plan de joint : dans ce cas, les susdits moyens de verrouillage sont prévus du côté du moule opposé audit arbre des deux demi-moules.

Dans un agencement connu de moule, chaque demi-moule comprend un porte-moule auquel est fixé intérieurement une coquille munie d'une demi-empreinte de moulage, le plan de joint étant défini par les deux coquilles accolées en position de fermeture du moule : dans ce cas, il est avantageux que les moyens de verrouillage soient supportés par les deux porte-moules.

Dans un mode de réalisation préféré du fait que la conception des moyens d'entraînement du lardon peut s'en trouver simplifiée, le lardon est supporté par le susdit bord à recouvrement intérieur.

Dans un exemple de réalisation possible, les crochets respectifs desdits deux bords à recouvrement et le lardon s'étendent de façon continue sensiblement sur toute la hauteur du moule. Mais, dans un autre exemple de réalisation intéressant en raison de l'allégement pondéral (et donc de la réduction d'inertie qui en résulte)., on peut prévoir que le lardon et au moins le crochet du bord à recouvrement en vis-à-vis s'étendent de façon discontinue sensiblement sur toute la hauteur du moule.

Dans un mode de réalisation tout particulièrement préféré, le lardon est supporté à rotation, sur ou par son axe, avec un jeu radial. Grâce à cette disposition, lorsque les deux demi-moules sont soumis à des efforts tendant à les écarter l'un de l'autre, c'est le lardon lui-même qui est plaqué contre les faces des crochets précités, de sorte que son axe de pivotement ne transmet aucun effort. Cet axe est uniquement destiné à retenir le lardon sur le demi-moule correspondant et il peut donc être dimensionné de façon minimale avec, là encore, une réduction de poids.

Les dispositions conformes à l'invention trouvent une application toute particulière dans les installations de grande production comportant un dispositif de moulage du type carrousel mobile en rotation équipé en général d'une multiplicité de moules répartis périphériquement. Dans ce cas, dans le dispositif de moulage agencé conformément avec les dispositions énoncées ci-dessus, on peut prévoir que les moyens d'entraînement fonctionnellement associés au lardon comprennent au moins un galet suiveur fou supporté, par l'intermédiaire d'un mécanisme de renvoi, par une extrémité d'un arbre de rotation du lardon, ledit galet étant propre à coopérer avec une came fixe de guidage disposée latéralement au carrousel rotatif. De façon intéressante alors, les moyens d'entraînement du lardon comprennent un ressort de rappel propre à rappeler le lardon dans sa susdite position effacée ou bien, dans une variante préférée, dans sa susdite position saillante.

L'invention sera mieux comprise à la lecture de la rescription détaillée qui suit de certains modes de réalisation préférés donnés uniquement à titre d'exemples purement illustratifs. Dans cette description, on se réfère aux dessins annexés sur lesquels :
- les figures 1A, 1B et 1C sont des vues très schématiques de dessus d'un moule portefeuille agencé conformément à l'invention et montré dans respectivement trois positions fonctionnelles différentes (respectivement moule fermé et verrouillé, moule fermé et déverrouillé, moule ouvert) ;
- les figures 2A et 2B sont des vues en perspective, respectivement en positions de fermeture et d'ouverture, d'un exemple de réalisation concret d'un moule agencé selon l'invention, le moule étant, à la figure 2A, montré coupé et seule sa partie inférieure étant illustrée et, à la figure 2B, le lardon étant coupé verticalement de manière à en rendre visible l'agencement ;
- la figure 3 est une vue analogue à celle de la figure 2B, montrant une variante de réalisation du moule ; et
- la figure 4 est une vue éclatée en perspective montrant un autre mode de réalisation des dispositions de l'invention.

Les dispositions conformes à l'invention sont des perfectionnements apportés aux dispositifs de moulage pour la fabrication par soufflage ou étirage-soufflage de récipients, tels que des bouteilles, à partir de préformes en matériau thermoplastique (par exemple en PET) chauffé. Un tel dispositif de moulage comporte au moins un moule comprenant au moins deux demi-moules (éventuellement une troisième partie forme un fond de moule déplaçable axialement) qui sont déplaçables mutuellement entre une position d'ouverture dans laquelle ils sont écartés l'un de l'autre et une position de fermeture dans laquelle ils sont étroitement accolés l'un contre l'autre par des faces respectives coopérantes définissant un plan de joint, des moyens de verrouillage étant prévus pour verrouiller les deux demi-moules en position de fermeture et empêcher leur écartement ou entrebâillement lors de l'introduction du fluide de soufflage sous pression très élevée (par exemple typiquement de l'ordre de 40 x 10⁵ Pa).

De façon courante, de tels dispositifs de moulage peuvent comporter une multiplicité de moules et peuvent alors être agencés sous forme d'un dispositif rotatif ou carrousel avec les moules répartis périphériquement, les diverses fonctions d'ouverture/fermeture, verrouillage/déverrouillage, ... des moules pouvant être commandées séquentiellement au cours de la rotation par des galets suiveurs portés par les moules et coopérant avec des cames de guidage montées fixes à l'extérieur de la partie tournante.

Bien que les dispositions conformes à l'invention puissent trouver application dans tout type de moule, elles trouvent application tout particulièrement dans les moules équipés de deux demi-moules rotatifs l'un par rapport à l'autre ou moule portefeuille, qui sont actuellement très largement répandus, et c'est donc dans le cadre d'un moule portefeuille que les dispositions de l'invention vont être exposées en détail, sans pour autant que la protection soit limitée à ce seul type de moule.

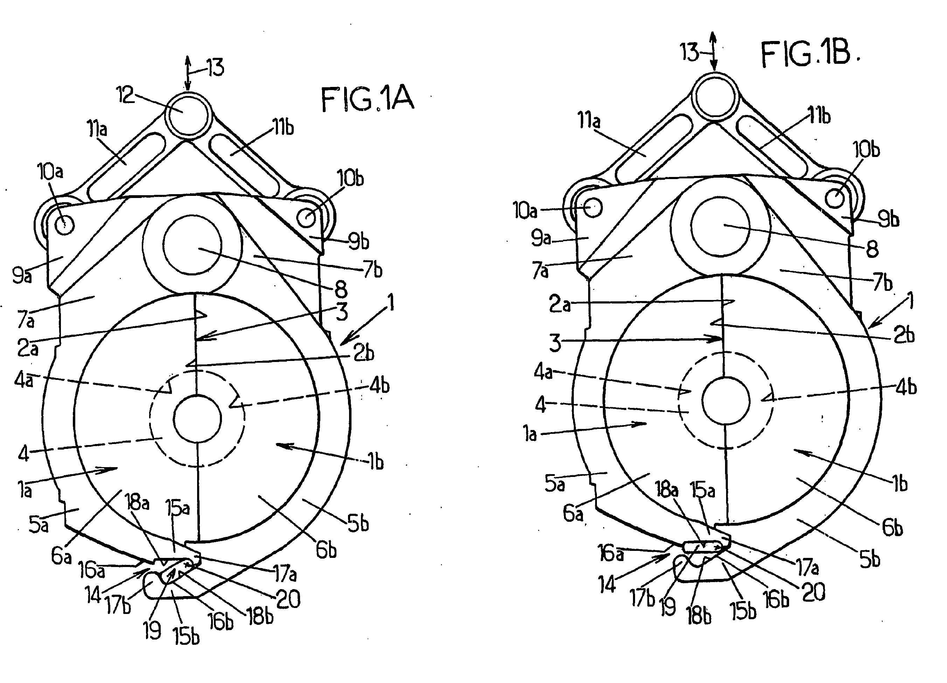

Aux figures 1A à 1C est illustré de façon simplifiée, en vue de dessus, l'agencement général d'un moule portefeuille, désigné dans son ensemble par la référence 1, comprenant deux demi-moules 1a et 1b (un fond mobile.axialement - non montré - pouvant également être prévu à la base du moule). Les deux demi-moules possèdent respectivement deux faces coopérantes ou faces d'appui 2a, 2b qui, en position de fermeture, définissent un plan de joint 3 (figures 1A, 1B). Les faces coopérantes sont évidées avec respectivement deux demi-empreintes 4a, 4b qui, réunies, définissent le volume de moulage 4 ayant la forme extérieure du récipient à obtenir, ou tout au moins une grande partie de cette forme à l'exclusion de son fond.

Dans l'exemple plus particulièrement illustré aux figures 1A à 1C, chaque demi-moule 1a, 1b a une structure composite et comprend au moins une armature extérieure ou porte-moule 5a, 5b et une pièce de moulage intérieure ou coquille 6a, 6b, qui est fixée de manière démontable dans le porte-moule respectif et qui comporte la demi-empreinte respective 4a, 4b précitée. Les coquilles peuvent être elles-mêmes en deux parties : la coquille proprement dite avec la demi-empreinte et un porte-coquille interposé entre la coquille et le porte-moule respectif, comme décrit dans le document EP 0 821 641 au nom de la Demanderesse.

S'agissant, à titre d'exemple préféré, d'un moule de type portefeuille, les demi-moules 1a, 1b (ici, les porte-moules 5a, 5b) comportent, d'un côté, des joues saillantes 7a, 7b respectivement qui s'intercalent les unes entre les autres de façon superposée et qui sont traversées par un arbre 8 disposé dans le prolongement du plan de joint.

En outre deux oreilles saillantes respectivement 9a, 9b supportent à rotation, par des axes 10a, 10b écartés de part et d'autre de l'arbre 8, les extrémités de deux biellettes d'actionnement 11a, 11b dont les deux autres extrémités respectives sont réunies à libre rotation sur un arbre 12 qui peut être déplacé linéairement (flèche 13), en direction de l'axe 8 pour la fermeture du moule ou en sens inverse pour l'ouverture du moule, par des moyens d'entraînement non montrés.

De l'autre côté du plan de joint 3 et à l'opposé de l'arbre 8 sont prévus des moyens de verrouillage 14 destinés à maintenir les deux demi-moules 1a, 1b en position de fermeture lors de l'application de la pression de pré-soufflage et/ou de soufflage.

Les moyens de verrouillage 14 sont agencés de la façon suivante.

A l'opposé de l'arbre 8 réunissant les deux demi-moules 1a, 1b, les deux bords respectifs des deux demi-moules qui bordent leurs faces d'appui 2a, 2b respectives sont agencés sous forme de deux bords 15a, 15b à recouvrement mutuel qui présentent des faces respectives coopérantes disposées en vis-à-vis radial dans la position de fermeture du moule montrée à la figure 1A.

Dans l'exemple illustré, un desdits bords à recouvrement, par exemple le bord 15a du demi-moule 1a, ne s'étend pas, circonférentiellement, au-delà de la face d'appui 2a et a sa face coopérante 16a qui se termine en forme de crochet 17a tourné vers l'extérieur ; en outre, la face 16a est creusée d'un évidement 18a adjacent au crochet 17a.

L'autre desdits bords 15b s'étend au-delà de la face d'appui 2b et est décalé radialement vers l'extérieur de sorte que, dans la position de fermeture illustrée à la figure 1A, le bord 15b recouvre extérieurement le bord 15a et que la face coopérante 16b est située extérieurement (face coopérante extérieure) en vis-à-vis de la face coopérante 16a située intérieurement (face coopérante intérieure).

La face coopérante extérieure 16b est agencée de façon sensiblement analogue à la face 16a. La face 16b se termine en forme de crochet 17b tourné vers l'intérieur, au-delà du crochet 17a, et elle est creusée d'un évidement 18b adjacent au crochet 17b.

Les deux faces coopérantes 16a, 16b en vis-à-vis, profilées avec les deux crochets respectifs 17a, 17b et les deux évidements 18a, 18b, s'étendent sensiblement sur toute la hauteur du moule.

Les deux crochets 17a, 17b sont, dans la position de fermeture du moule illustrée à la figure 1A, décalés circonférentiellement l'un par rapport à l'autre en étant écartés angulairement l'un de l'autre et les faces 16a, 16b se trouvent alors en vis-à-vis.

Un lardon 19, s'étendant lui aussi sensiblement sur toute la hauteur du moule, est supporté de façon rotative, par un axe 20 coïncidant sensiblement avec un de ses bords verticaux, par l'un des bords 15a, 15b de manière qu'il soit engagé entre les deux crochets 17a, 17b dans la position de fermeture du moule.

Le lardon 19 pourrait être supporté indifféremment par l'un ou l'autre desdits bords 15a, 15b pour que soit obtenue la fonction recherchée de verrouillage. Toutefois, le bord 15a étant radialement plus proche de l'arbre 8 de rotation des demi-moules 1a, 1b, il semble que l'inertie sera moindre en montant le lardon 19 sur le bord 15a. En outre, les moyens d'entraînement en rotation du lardon, dont il sera question, semblent pouvoir être réalisés de façon plus simple si le lardon est solidaire du bord 15a.

Dans ces conditions, le lardon 19 est, comme illustré à la figure 1A, monté sur le bord 15a de telle manière que le bord longitudinal du lardon auquel est associé l'axe de rotation 20 soit engagé au contact du crochet 17a, les faces coopérantes du lardon 19 et du crochet 17a étant arrondies.

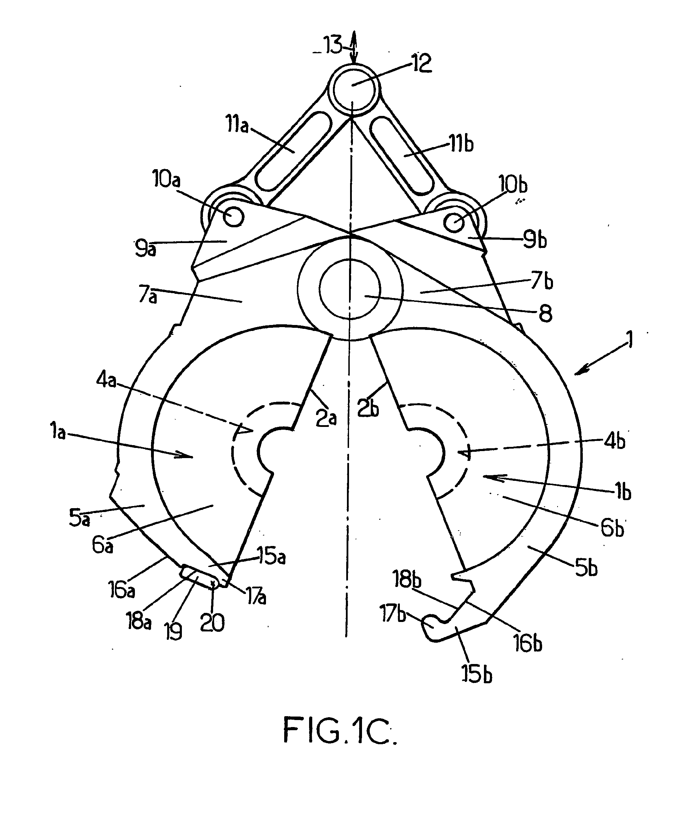

Enfin, des moyens d'entraînement (dont un exemple de réalisation sera indiqué plus loin) permettent de faire pivoter le lardon 19 autour de son axe 20, sur une plage angulaire prédéterminée, entre deux positions fonctionnelles extrêmes, à savoir :
- une position effacée (illustrée à la figure 1B) dans laquelle le lardon 19 est effacé dans l'évidement 18a (dans lequel il est articulé), la conformation de celui-ci étant telle que le lardon 19 n'engage alors pas l'autre bord 15b à recouvrement, plus exactement l'autre crochet 17b de cet autre bord 15b, et autorise un déplacement relatif mutuel des deux demi-moules (ouverture du moule comme illustré à la figure 1C, et fermeture du moule), et
- une position saillante ou pivotée (illustrée à la figure lA) dans laquelle le lardon 19 est pivoté vers l'extérieur et - les deux demi-moules 1a, 1b étant en position de fermeture - s'engage dans l'évidement 18b de l'autre bord à recouvrement 15b, de sorte que, lorsque les deux demi-moules 1a, 1b sont soumis à des efforts tendant à les écarter l'un de l'autre (étape de soufflage et/ou étape de pré-soufflage), le lardon 19 est en prise entre les deux crochets 17a, 17b respectifs et retient mécaniquement les deux demi-moules 1a, 1b.

On soulignera ici que, dans le cas exposé plus haut et illustré aux figures 1A à 1C où les demi-moules 1a, 1b sont agencés avec des porte-moules 5a, 5b respectifs, les bords à recouvrement 1a, 1b appartiennent respectivement aux deux porte-moules 5a, 5b.

On soulignera également que, sur les figures 1A à 1C, les bords à recouvrement 15a, 15b ont été illustrés sous forme de terminaisons profilées intégrales des porte-moules 5a, 5b ; mais il pourrait être envisagé de constituer lesdits bords à recouvrement ou l'un deux 15a et/ou 15b sous forme de pièces profilées indépendantes rapportées (notamment par boulonnage) sur les porte-moules respectifs.

L'agencement des moyens de verrouillage conformes à l'invention est particulièrement intéressant non seulement parce qu'il est simple (peu de pièces composantes, peu d'usinages) et qu'il procure un verrouillage particulièrement efficace des demi-moules en position de fermeture, mais aussi en raison de la relativement faible course angulaire (qui peut par exemple être de l'ordre de 20°) du lardon 19 entre ses deux positions fonctionnelles extrêmes. Cette faible course angulaire se traduit par un verrouillage/déverrouillage rapide, qui contribue (en conjonction avec d'autres dispositions) à autoriser un accroissement des cadences de fonctionnement.

Un mode de réalisation préféré particulièrement important (qu'il n'est pas possible d'illustrer eu égard aux dimensions trop faibles mises en jeu) consiste en ce que le lardon 19 est supporté à rotation, par le bord à recouvrement 15a, avec un jeu radial (par exemple les bouts d'axe extrêmes du lardon sont engagés avec un jeu radial dans les paliers de support prévus dans le bord à recouvrement 15a). Ainsi, lorsque les demi-moules 1a, 1b sont soumis à des efforts tendant à les écarter l'un de l'autre, le lardon 19 peut venir librement en appui contre le crochet 17a : la reprise des efforts se fait alors par des surfaces d'appui relativement grandes, avec des pressions plus faibles, et l'axe 20 (ou les bouts de cet axe) ne subit aucun effort de cisaillement et peut être plus petitement dimensionné (économie de matière, réduction de poids et donc d'inertie).

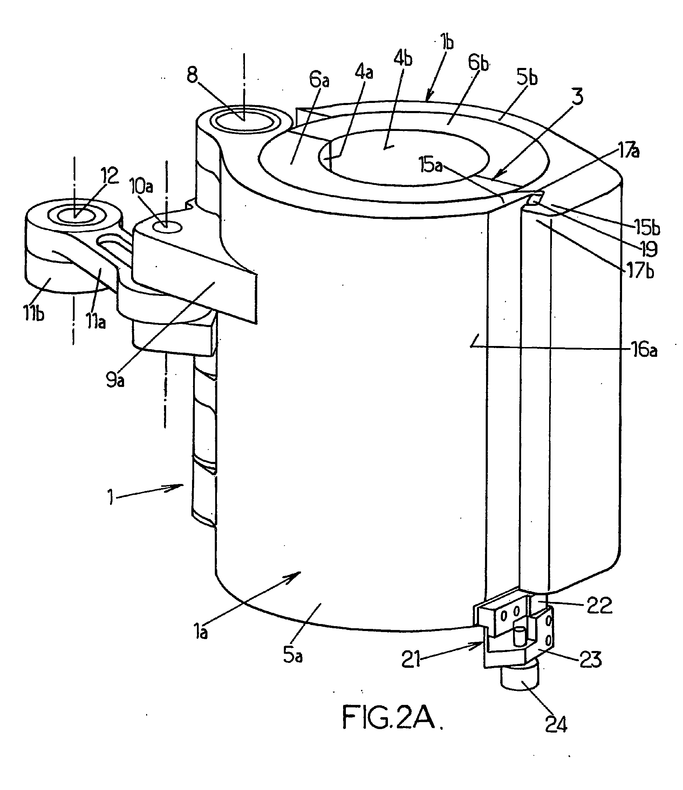

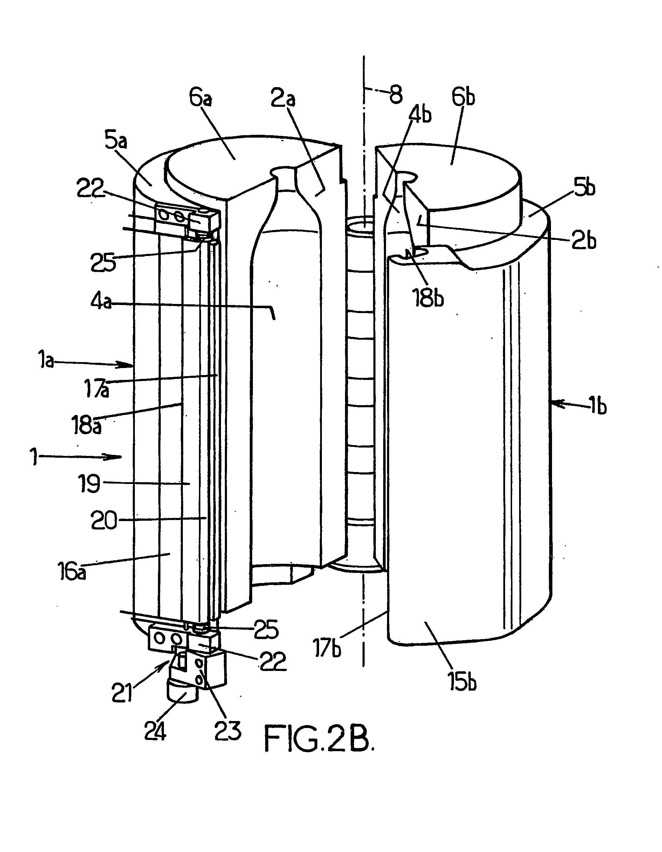

Aux figures 2A et 2B est donnée une représentation, dans deux positions fonctionnelles respectives différentes - respectivement fermée et ouverte -, d'un mode de réalisation concret d'un moule, montré en perspective, agencé conformément à l'invention (les références numériques des figures 1A à 1C étant reprises sur les figures 2A et 2B).

Dans ce mode de réalisation, les crochets respectifs 17a, 17b des deux bords à recouvrement 15a, 15b ainsi que le lardon 19 s'étendent de façon continue sur sensiblement toute la hauteur du moule 1.

Sur ces figures 2A, 2B est montré, également, un exemple de réalisation des moyens 21 d'entraînement en rotation du lardon 19, susceptibles d'être mis en oeuvre dans le cas où le moule 1 est monté sur un carrousel rotatif. La figure 2B (moule en position d'ouverture) montre la manière dont le lardon 19 est monté, et plus précisément la manière dont les extrémités de son axe de rotation 20, saillant au-delà des bouts du lardon 19, tourillonnent dans des paliers 22 solidaires du demi-moule 1a. L'extrémité inférieure de l'axe 20, traversant le palier 22 inférieur, est solidaire d'un bras radial 23 dont l'extrémité libre supporte un galet 24 fou. Ce galet 24 est propre à coopérer avec une came fixe (non montrée), solidaire du bâti de la machine, qui s'étend selon la trajectoire suivie par le galet 24 lors de la rotation du carrousel supportant le moule 1.

Dans une mise en oeuvre possible, l'entraînement par galet/came du lardon 19 en rotation est actif pour le verrouillage du moule en position de fermeture, tandis que la rotation du lardon en sens inverse pour le déverrouillage est obtenue par l'action de ressorts de rappel 25.

Dans une variante de mise en oeuvre préférée, l'entraînement par galet/came du lardon 19 en rotation est actif pour le déverrouillage du moule en position d'ouverture, tandis que la rotation du lardon en sens inverse pour le verrouillage est obtenue par l'action de ressorts de rappel 25.

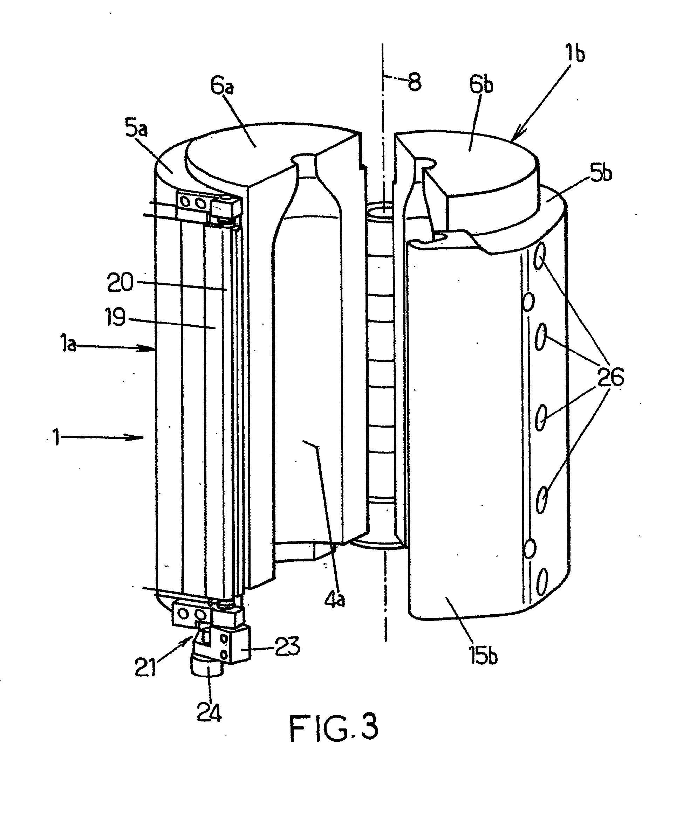

La figure 3 est une vue analogue à celle de la figure 2B (moule en position d'ouverture) illustrant une variante de réalisation selon laquelle le bord à recouvrement 15b, qui se situe radialement à l'extérieur en position de fermeture du moule, est constitué sous forme d'une pièce indépendante, rapporté sur le porte-moule 5b. Dans l'exemple illustré, cette pièce est fixée par boulonnage avec des boulons tangents dont seuls les orifices 26 des logements tangents sont visibles.

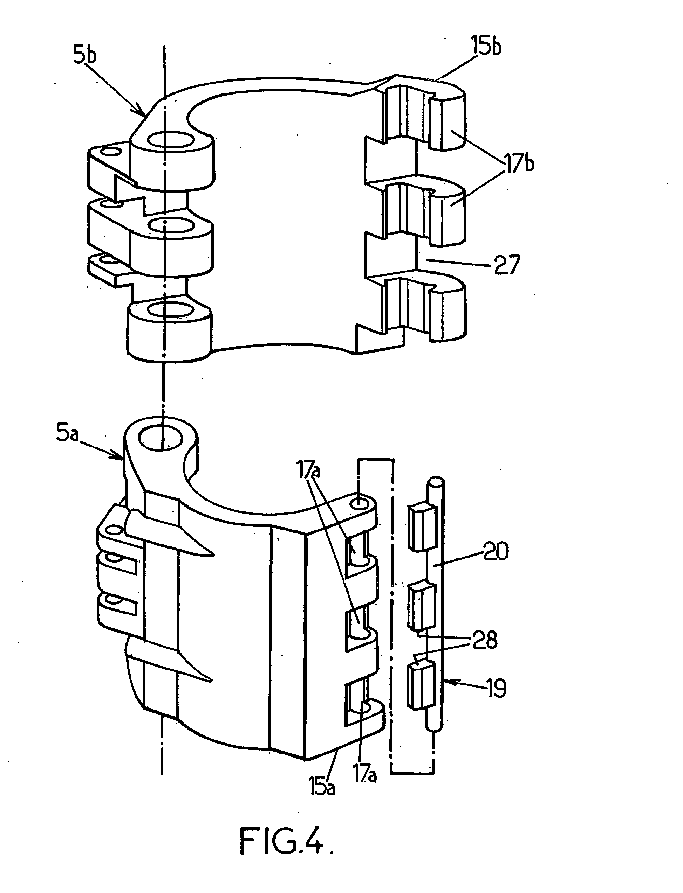

A la figure 4 sont montrés, en vue éclatée et en perspective, uniquement les porte-moules 5a et 5b et le lardon 19 avec son axe 20. Dans ce mode de réalisation, les bords à recouvrement respectivement 15a et 15b des deux porte-moules 5a, 5b, ainsi que le lardon 19 sont réalisés sous forme de structures discontinues. Comme indiqué plus haut, ces structures s'étendent sur toute la hauteur du moule, de sorte qu'on obtient cependant une reprise relativement régulière et continue des efforts sur toute la hauteur du moule, tout en mettant en oeuvre des éléments allégés.

Ainsi le bord à recouvrement. 15b, situé extérieurement en position de fermeture du moule, comporte une pluralité de crochets 17b superposés et séparés par des intervalles 27 dont la hauteur doit rester limitée ; l'agencement individuel de chaque crochet 17b reste identique à celui du crochet unique des modes de réalisations envisagés plus haut.

De même, le lardon 19 est constitué d'une succession de pannetons 28, ayant le même écartement que les crochets 17b, solidaires de l'axe 20.

Enfin, le bord à recouvrement 17a du porte-moule 5a est lui aussi équipé d'une pluralité de crochets 17a en correspondance avec les crochets 17b et les pannetons 28. Dans ce mode de réalisation, on peut prévoir que les intervalles entre les crochets sont pleins et percés d'un alésage pour le passage de l'axe 20, comme cela est illustré sur la figure 4.

On notera que, si cela s'avère nécessaire, certains éléments à structure discontinue qui viennent d'être décrits peuvent être fonctionnellement associés à des éléments à structure continue. Ainsi par exemple, les crochets discontinus 17b du bord à recouvrement 15b et le lardon 19 à pannetons 28 peuvent être associés à un crochet 17a continu.

## Revendications

1. Dispositif de moulage pour la fabrication par soufflage ou étirage-soufflage de récipients à partir de préformes en matériau thermoplastique chauffé, ledit dispositif comportant au moins un moule (1) comprenant au moins deux demi-moules (1a, 1b) déplaçables mutuellement entre une position d'ouverture dans laquelle ils sont écartés l'un de l'autre et une position de fermeture dans laquelle ils sont étroitement accolés l'un contre l'autre par des faces d'appui (2a, 2b) respectives coopérantes définissant un plan de joint (3), les deux demi-moules (1a, 1b) ayant au moins deux bords (15a, 15b) respectifs correspondants de leurs faces d'appui (2a, 2b) respectives qui sont agencés sous forme de deux bords à recouvrement mutuel avec des faces (16a, 16b) respectives coopérantes en vis-à-vis radial dans la position de fermeture du moule, un desdits bords à recouvrement (15a) situé intérieurement a sa face coopérante (16a) qui se termine en crochet (17a) et qui présente, adjacent au crochet, un évidement (18a) et l'autre desdits bords à recouvrement (15b) situé extérieurement a sa face coopérante (16b) qui se termine en crochet (17b) et qui présente, adjacent au crochet, un évidement (18b), des moyens de verrouillage (14) étant fonctionnellement associés auxdits bords à recouvrement,
**caractérisé en ce que** lesdits moyens de verrouillage (14) sont agencés de la façon suivante :
- lesdits crochets (17a, 17b) et évidements (18a, 18b) respectivement desdits bords à recouvrement intérieur (15a) et extérieur (15b) s'étendent sensiblement sur toute la hauteur du moule,
- un lardon (19) s'étendant sensiblement sur toute la hauteur du moule est monté de façon rotative autour d'un axe (20) en correspondance avec un de ses bords dans l'un desdits évidements et au contact du crochet respectif, et
- des moyens d'entraînement sont associés fonctionnellement audit lardon (19) pour son pivotement autour de son axe (20) entre deux positions extrêmes,
ce grâce à quoi le lardon (19) peut occuper deux positions fonctionnelles, à savoir :
- une position effacée dans son évidement de montage dans laquelle le lardon (19) n'engage pas l'évidement en vis-à-vis de l'autre bord à recouvrement et autorise un déplacement relatif mutuel des deux demi-moules (ouverture ou fermeture du moule) et
- une position saillante dans laquelle le lardon (19) est pivoté vers l'extérieur de son évidement de montage et - les deux demi-moules (1a, 1b) étant en position de fermeture - s'engage dans l'évidement en vis-à-vis de l'autre bord à recouvrement de sorte que, lorsque les deux demi-moules (1a, 1b) sont soumis à des efforts tendant à les écarter l'un de l'autre (pré-soufflage, soufflage), ledit lardon (19) est en prise avec les deux crochets (17a, 17b) respectifs des deux bords à recouvrement (15a, 15b) et retient mécaniquement les deux demi-moules (1a, 1b).

2. Dispositif de moulage selon la revendication 1, **caractérisé en ce que** le moule (1) est du type portefeuille avec les deux demi-moules (1a, 1b) articulés mutuellement en rotation sur un arbre (8) sensiblement parallèle à un côté du plan de joint (3) et **en ce que** les susdits moyens de verrouillage (14) sont prévus du côté du moule opposé audit arbre (8) des deux demi-moules.

3. Dispositif de moulage selon la revendication 1 ou 2, **caractérisé en ce que** chaque demi-moule (1a, 1b) comprend un porte-moule (5a, 5b) auquel est fixé intérieurement une coquille (6a, 6b) munie d'une demi-empreinte (4a, 4b) de moulage, le plan de joint (6) étant défini par les deux coquilles (6a, 6b) accolées en position de fermeture du moule et **en ce que** les moyens de verrouillage (14) sont supportés par les deux porte-moules (5a, 5b).

4. Dispositif de moulage selon l'une quelconque des revendications 1 à 3, **caractérisé en ce que** le lardon est supporté par le susdit bord à recouvrement intérieur.

5. Dispositif de moulage selon l'une quelconque des revendications 1 à 4, **caractérisé en ce que** les crochets (17a, 17b) respectifs desdits deux bords à recouvrement (15a, 15b) et le lardon (19) s'étendent de façon continue sensiblement sur toute la hauteur du moule.

6. Dispositif de moulage selon l'une quelconque des revendications 1 à 4, **caractérisé en ce que** le lardon (19) et au moins le crochet du bord à recouvrement en vis-à-vis s'étendent de façon discontinue sensiblement sur toute la hauteur du moule.

7. Dispositif de moulage selon l'une quelconque des revendications 1 à 6, **caractérisé en ce que** le lardon (19) est supporté à rotation, sur ou par son axe, avec un jeu radial.

8. Dispositif de moulage selon l'une quelconque des revendications 1 à 7, **caractérisé en ce que** ce dispositif est du type carrousel mobile en rotation et **en ce que** les moyens d'entraînement fonctionnellement associés au lardon (19) comprennent au moins un galet suiveur (24) fou supporté, par l'intermédiaire d'un mécanisme de renvoi, par une extrémité d'un arbre de rotation du lardon, ledit galet étant propre à coopérer avec une came fixe de guidage disposée latéralement au carrousel rotatif.

9. Dispositif de moulage selon la revendication 8, **caractérisé en ce que** les moyens d'entraînement du lardon (19) comprennent un ressort de rappel (25) propre à rappeler le lardon (19) dans sa susdite position effacée.

10. Dispositif de moulage selon la revendication 8, **caractérisé en ce que** les moyens d'entraînement du lardon (19) comprennent un ressort de rappel (25) propre à rappeler le lardon (19) dans sa susdite position saillante.

## Claims

1. A molding device for producing containers by blow molding or stretch blow molding from preforms made of a heated thermoplastic, said device comprising at least one mold (1) consisting of at least two half-molds (1a, 1b), mutually displaceable between an open position in which they are separated from one another and a closed position in which they are tightly pressed against one another by respective cooperating bearing faces (2a, 2b), defining a joint plane (3), the two half-molds (1a, 1b) having at least two respective corresponding edges (15a, 15b) of their respective bearing faces (2a, 2b) which are radially designed in the form of two mutually overlapping edges with respective opposing mating faces (16a, 16b) in the closed position of the mold, one of said overlapping edges (15a) located on the inside has a mating face (16a) which terminates in a hook (17a) and which has a recess (18a) adjacent to the hook and the other of said overlapping edges (15b) located on the outside has a mating face (16b) which terminates in a hook (17b) and which has a recess (18b) adjacent to the hook,locking means (14) being functionally associated with said overlapping edges,
**characterized in that** said locking means (14) are designed in the following manner:
- said respective hooks (17a, 17b) and recesses (18a, 18b) of said internal (15a) and external (15b) overlapping edges extend substantially over the entire height of the mold;
- a gib (19) extending substantially over the entire height of the mold is mounted rotatably about a pin (20) corresponding to one of its edges in one of said recesses and in contact with the respective hook; and
- drive means are functionally associated with said gib (19) for pivoting about its pin (20) between two extreme positions,
whereby the gib (19) may occupy two functional positions, namely:
- a position inserted into its mounting recess in which the gib (19) does not engage the opposing recess of the other overlapping edge and allows a mutual relative displacement of the two half-molds ; and
- a projecting position in which the gib (19) is pivoted toward the outside of its mounting recess and - the two half-molds (1a, 1b) being in the closed position - engages in the opposing recess of the other overlapping edge such that, when the two half-molds (1a, 1b) are subjected to forces separating them from one another, said gib (19) is engaged with the two respective hooks (17a, 17b) of the two overlapping edges (15a, 15b) and mechanically holds the two half-molds (1a, 1b).

2. The molding device as claimed in claim 1, **characterized in that** the mold (1) is of the jackknife type with the two half-molds (1a, 1b) mutually articulated in rotation on a shaft (8) substantially parallel to one side of the joint plane (3), and **in that** said locking means (14) are provided on the side of the mold opposing said shaft (8) of the two half-molds.

3. The molding device as claimed in claim 1 or 2, **characterized in that** each half-mold (1a, 1b) comprises a mold carrier (5a, 5b) to which is fixed internally a shell (6a, 6b) provided with a mold half-impression (4a, 4b), the joint plane (6) being defined by the two shells (6a, 6b) pressed against one another in the closed position of the mold, and **in that** the locking means (14) are supported by the two mold carriers (5a, 5b).

4. The molding device as claimed in any one of claims 1 to 3, **characterized in that** the gib is supported by said internal overlapping edge.

5. The molding device as claimed in any one of claims 1 to 4, **characterized in that** the respective hooks (17a, 17b) of said two overlapping edges (15a, 15b) and the gib (19) extend continuously, substantially over the entire height of the mold.

6. The molding device as claimed in any one of claims 1 to 4, **characterized in that** the gib (19) and at least the hook of the opposing overlapping edge extend discontinuously, substantially over the entire height of the mold.

7. The molding device as claimed in any one of claims 1 to 6, **characterized in that** the gib (19) is supported in rotation, on or by its pin, with radial play.

8. The molding device as claimed in any one of claims 1 to 7, **characterized in that** this device is of the carousel type and mobile in rotation, and **in that** the drive means functionally associated with the gib (19) consist of at least one idler roller (24) supported, by means of a return mechanism, by one end of a rotating shaft of the gib, said roller being capable of cooperating with a fixed guide cam arranged laterally on the rotating carousel.

9. The molding device as claimed in claim 8, **characterized in that** the drive means of the gib (19) consist of a return spring (25) capable of returning the gib (19) into said inserted position thereof.

10. The molding device as claimed in claim 8, **characterized in that** the drive means of the gib (19) consist of a return spring (25) capable of returning the gib (19) into said projecting position thereof.

## Patentansprüche

1. Formvorrichtung zur Herstellung von Behältern aus Vorformlingen aus einem erwärmten thermoplastischen Werkstoff durch Blasformen oder Streckblasen, wobei die Vorrichtung mindestens eine Form (1) mit mindestens zwei Formhälften (1a, 1b) aufweist, die zueinander bewegt werden können zwischen einer geöffneten Stellung, in der sie voneinander entfernt sind, und einer geschlossenen Stellung, in der sie mit den zusammenwirkenden jeweiligen Auflageflächen (2a, 2b), die eine Trennebene (3) definieren, eng aneinanderliegen, wobei die beiden Formhälften (1a, 1b) mindestens zwei entsprechende jeweilige Ränder (15a, 15b) ihrer jeweiligen Auflageflächen (2a, 2b) aufweisen, die in Form von zwei sich gegenseitig überdeckenden Rändern ausgelegt sind, deren zusammenwirkende jeweilige Flächen (16a, 16b) in der geschlossenen Stellung der Form radial einander gegenüber liegen, wobei einer der überdeckenden Ränder (15a), der sich innen befindet, die mitwirkende Fläche (16a) aufweist, die in einem Haken (17a) endet und die neben dem Haken eine Vertiefung (18a) aufweist, und der andere überdeckende Rand (15b), der sich außen befindet, die mitwirkende Fläche (16b) aufweist, die in einem Haken (17b) endet und die neben dem Haken eine Vertiefung (18b) aufweist, wobei die Arretiermittel (14) funktionell mit den sich überdeckenden Rändern verbunden sind, **dadurch gekennzeichnet, dass** die Arretiermittel (14) folgendermaßen ausgelegt sind:
- die Haken (17a, 17b) und die Vertiefungen (18a, 18b) des inneren (15a) beziehungsweise äußeren (15b) überdeckenden Rands verlaufen ungefähr über die gesamte Höhe der Form,
- eine Leiste (19), die sich ungefähr über die gesamte Höhe der Form erstreckt, ist drehbar um einen entsprechenden Zapfen (20) montiert, wobei einer ihrer Ränder in einer der Vertiefungen liegt und den jeweiligen Haken berührt, und
- Antriebsmittel sind funktionell mit der Leiste (19) verbunden, damit sie sich zwischen zwei Grenzstellungen um ihren Zapfen (20) drehen kann,
wodurch die Leiste (19) zwei Funktionsstellungen einnehmen kann, und zwar:
- eine in der Montagevertiefung zurückgezogene Stellung, in der die Leiste (19) nicht in die gegenüberliegende Vertiefung des anderen überdeckenden Rands eingreift und eine Relativbewegung der beiden Formhälften zueinander ermöglicht, und
- eine herausragende Stellung, in der die Leiste (19) aus ihrer Montagevertiefung nach außen gedreht ist und - da sich die beiden Formhälften (1a, 1b) in der geschlossenen Stellung befinden - in die gegenüberliegende Vertiefung des anderen überdeckenden Rands eingreift, sodass, wenn die beiden Formhälften (1a, 1b) Kräften ausgesetzt sind, die sie auseinanderbringen, die Leiste (19) mit den beiden jeweiligen Haken (17a, 17b) der beiden sich überdeckenden Ränder (15a, 15b) in Eingriff ist und die beiden Formhälften (1a, 1b) mechanisch festhält.

2. Formvorrichtung nach Anspruch 1, **dadurch gekennzeichnet, dass** die Form (1) vom Klappformtyp ist, wobei die beiden Formhälften (1a, 1b) gegeneinander beweglich drehbar auf einer Welle (8) angeordnet sind, die ungefähr parallel zu einer Seite der Trennebene (3) verläuft, und **dadurch**, dass die vorstehend genannten Arretiermittel (14) auf der Seite der Form gegenüber der Welle (8) der beiden Formhälften vorgesehen sind.

3. Formvorrichtung nach Anspruch 1 oder 2, **dadurch gekennzeichnet, dass** jede Formhälfte (1a, 1b) einen Formträger (5a, 5b) umfasst, an dem innen eine Schale (6a, 6b) befestigt ist, die mit einer Formkavitäthälfte (4a, 4b) versehen ist, wobei die Trennebene (6) von den beiden Kokillen (6a, 6b) definiert wird, die in der geschlossenen Stellung der Form aneinanderliegen, und **dadurch**, dass die Arretiermittel (14) von den beiden Formträgern (5a, 5b) gehalten werden.

4. Formvorrichtung nach einem der Ansprüche 1 bis 3, **dadurch gekennzeichnet, dass** die Leiste von dem vorstehend genannten inneren überdeckenden Rand gehalten wird.

5. Formvorrichtung nach einem der Ansprüche 1 bis 4, **dadurch gekennzeichnet, dass** die jeweiligen Haken (17a, 17b) der beiden sich überdeckenden Ränder (15a, 15b) und die Leiste (19) durchgängig ungefähr über die gesamte Höhe der Form verlaufen.

6. Formvorrichtung nach einem der Ansprüche 1 bis 4, **dadurch gekennzeichnet, dass** die Leiste (19) und mindestens der Haken des gegenüber liegenden überdeckenden Rands unterbrochen ungefähr über die gesamte Höhe der Form verlaufen.

7. Formvorrichtung nach einem der Ansprüche 1 bis 6, **dadurch gekennzeichnet, dass** die Leiste (19) mit einem Radialspiel auf ihrem Zapfen drehbar gelagert ist oder von ihrem Zapfen drehbar gehalten wird.

8. Formvorrichtung nach einem der Ansprüche 1 bis 7, **dadurch gekennzeichnet, dass** diese Vorrichtung ein drehbar bewegliches Karussell ist, und **dadurch**, dass die Antriebsmittel, die funktionell mit der Leiste (19) verbunden sind, mindestens eine Laufrolle (24) umfassen, die über einen Hilfsmechanismus von einem Ende einer sich drehenden Welle der Leiste getragen wird, wobei sich die Rolle dafür eignet, mit einem festen Führungsnocken zusammenzuwirken, der seitlich am sich drehenden Karussell angeordnet ist.

9. Formvorrichtung nach Anspruch 8, **dadurch gekennzeichnet, dass** die Antriebsmittel der Leiste (19) eine Rückstellfeder (25) umfassen, die sich dafür eignet, die Leiste (19) in ihre vorstehend genannte zurückgezogene Stellung zurückzubringen.

10. Formvorrichtung nach Anspruch 8, **dadurch gekennzeichnet, dass** die Antriebsmittel der Leiste (19) eine Rückstellfeder (25) umfassen, die sich dafür eignet, die Leiste (19) in ihre vorstehend genannte herausragende Stellung zurückzubringen.
